# EUROPEAN PATENT APPLICATION

(11) **EP 4 810 417 A1**
(43) Date of publication of application: **23.09.2026**
(21) Application number: 24928017.3
(22) Date of filing: 15.08.2024
(51) Int. Cl.: B65G 47/91, B65G 43/08, B65G 47/248, H01M 10/04

(54) **CELL INSERTION DEVICE**

(30) Priority: 08.03.2024 CN 202420450184 U
(71) Applicant: Contemporary Amperex Technology Co., Limited, Ningde, Fujian 352100 (CN)
(72) Inventor: ZHENG, Zhijian, Ningde, Fujian 352100 (CN); DONG, Huihua, Ningde, Fujian 352100 (CN); FAN, Xiang, Ningde, Fujian 352100 (CN); WANG, Dongsheng, Ningde, Fujian 352100 (CN); QUE, Tianxiang, Ningde, Fujian 352100 (CN); HONG, Chang, Ningde, Fujian 352100 (CN)
(74) Representative: Ziebig Hengelhaupt Intellectual Property Attorneys Patentanwaltskanzlei PartGmbB
(86) International application number: PCT/CN2024/112458
(87) International publication number: WO 2025/185086

(57) **Abstract**

A cell insertion device. The cell insertion device comprises a control device, a feeding station, a transfer station and a transfer mechanism. The feeding station is used for storing a case to be detected. The transfer station is used for storing a case that has passed the detection. The transfer mechanism comprises a manipulator provided with a suction member and a detection mechanism arranged on the manipulator. The control device controls the suction member to suction a case on the feeding station and controls the detection mechanism to detect the state of the case on the suction member. The state of the case comprises a first state and a second state that are different. When the case is in the first state, the control device controls the manipulator to transfer the case to the transfer station.

## Description

### CROSS-REFERENCE TO RELATED APPLICATIONS

This application claims priority to Chinese Patent Application No. 202420450184.0 filed on March 08, 2024 and entitled "CELL INSERTION DEVICE", which is incorporated by reference in its entirety.

### TECHNICAL FIELD

The present disclosure relates to the technical field of battery production, and in particular, to a cell insertion device.

### BACKGROUND

This section aims to provide a background or context for the implementations of the present disclosure. The description herein is not acknowledged as the existing technology simply because it is included in this section.

New energy batteries are increasingly applied to life and industry. For example, new energy vehicles with batteries have been widely used. In addition, batteries are further increasingly applied to the field of energy storage.

In a production process of a battery cell, after a bare battery cell is placed in a case and the case is closed with a top cover, a battery cell with the case can be obtained. However, in the related technology, during the insertion of the bare battery cell into the case, the orientation of the case is typically detected on a transfer and positioning platform. This affects cycle time. Moreover, once a reverse case is detected, a device needs to sound an alarm and be shut down to increase cycle time. As a result, the production efficiency is reduced.

### SUMMARY

In view of this, the embodiments of the present disclosure expect to provide a cell insertion device which can enhance the production efficiency of a battery cell.

To achieve the foregoing objective, an embodiment of the present disclosure provides a cell insertion device, including:
a control device;
a feeding station configured to store a case to be detected;
a transfer station configured to store a case that has succeeded in detection; and
a transfer mechanism including a manipulator provided with a suction member and a detection mechanism arranged on the manipulator, where the control device controls the suction member to suck the case on the feeding station and controls the detection mechanism to detect a state of the case on the suction member; and the state of the case includes a first state and a second state, and the first state and the second state are different.

When the case is in the first state, the control device controls the manipulator to transfer the case to the transfer station.

According to the cell insertion device provided in this embodiment of the present disclosure, in one aspect, by disposing the detection mechanism on the manipulator, the control device controls the suction member of the manipulator to suck the case on the feeding station and controls the detection mechanism to detect the state of the case on the suction member. The detection mechanism detects the state of the case on the suction member. The state of the case can be detected on the transfer mechanism. If the detection mechanism detects that the case is in the first state, the control device can directly control the manipulator to transfer the case to the transfer station without first transferring the case to the transfer station through the transfer mechanism, and then the state of the case is detected. The cell insertion device does not need to sound an alarm and be shut down, so that cycle time is reduced, and the production efficiency is enhanced.

In some embodiments, the transfer mechanism includes a first rotation mechanism. The first rotation mechanism is configured to drive the case on the suction member to rotate in a preset direction by a preset angle. A rotation shaft of the case that rotates in the preset direction is parallel to a bottom wall of the case.

When the case is in the first state, after the case rotates in the preset direction by 90°, the bottom wall of the case faces the detection mechanism.

When the case is in the second state, after the case rotates in the preset direction by 90°, an opening in a top of the case faces the detection mechanism.

The control device controls the detection mechanism to detect the state of the case on the suction member. If the detection mechanism detects the bottom wall (which does not include a bottom wall detected by the detection mechanism passing through the opening of the case herein) of the case within a preset range, it indicates that the case is in the first state, and the detection succeeds. The control device controls the manipulator to transfer the case that is in the first state to the transfer station. However, if the case is in the second state and after the case rotates by 90° in the preset direction, the opening in the top of the case faces the detection mechanism. In this case, the detection mechanism can detect only the opening of the case within the preset range and cannot detect the bottom wall of the case. It indicates that the case is in the second state, and the detection fails. The control device controls the correction mechanism to switch the case that is in the second state from the second state to the first state, and controls the manipulator to transfer the case switched to the first state to the transfer station.

In some embodiments, the cell insertion device further includes a correction mechanism configured to switch the case from the second state to the first state.

Herein, by disposing the detection mechanism on the manipulator, the control device controls the detection mechanism to detect the state of the case on the suction member. If the detection mechanism detects that the case is in the first state, it indicates that the detection succeeds. The control device controls the manipulator to transfer the case that is in the first state to the transfer station. If the detection mechanism detects that the case is in the second state, it indicates that the detection fails. The control device controls the correction mechanism to switch the case that is in the second state from the second state to the first state, and controls the manipulator to transfer the case switched to the first state to the transfer station. In one aspect, by disposing the detection mechanism on the manipulator, the control device controls the suction member of the manipulator to suck the case on the feeding station without first transferring the case to the transfer station through the transfer mechanism, and then the state of the case is detected. The cell insertion device does not need to sound an alarm and be shut down, so that the cycle time is reduced, and the production efficiency is enhanced. In another aspect, by providing the correction mechanism, the control device can control the correction mechanism to switch the case that is in the second state from the second state to the first state, so as to automatically correct an incoming case that is placed reversely, without sounding an alarm and shutting down the device. Manual intervention is not required either. This further enhances the production efficiency and increases the single-machine throughput.

In some embodiments, the correction mechanism is disposed on the manipulator and configured to switch the case on the suction member from the second state to the first state.

Herein, by disposing the correction mechanism on the manipulator, when the detection mechanism detects that the case is in the second state, the correction mechanism can directly switch, on the manipulator, the case on the suction member from the second state to the first state, and the manipulator does not need to place the case at another place to correct the state of the case, thereby reducing steps, reducing the cycle time, further enhancing the production efficiency, and increasing the single-machine throughput.

In some embodiments, the correction mechanism includes a carrier. When the case is in the second state, the control device controls the manipulator to transfer the case onto the carrier, and controls the case on the carrier to be switched from the second state to the first state.

The control device controls the manipulator to transfer the case to the carrier and controls the case on the carrier to be switched from the second state to the first state. That is, the correction mechanism is not disposed on the manipulator. The correction mechanism and the manipulator are disposed separately, thereby simplifying the structure and drive fit. It is conductive to enhancing the reliability and stability of the cell insertion device.

In some embodiments, the correction mechanism further includes a second rotation mechanism. The second rotation mechanism is configured to drive the case on the carrier to rotate by 180°, so that the case on the carrier is switched from the second state to the first state.

The correction mechanism is provided with the second rotation mechanism, and the case on the carrier is driven to rotate by 180° through the second rotation mechanism, so that the case on the carrier is switched from the second state to the first state. The structure is simple and reliable.

In some embodiments, the control device controls the manipulator to transfer the case that is in the first state in the correction mechanism to the transfer station.

Herein, after controlling the correction mechanism to switch the case that is in the second state from the second state to the first state, the control device controls the manipulator to transfer the case switched to the first state to the transfer station, thereby implementing automation of a correction process of the case, reducing the labor costs, and enhancing the production efficiency.

In some embodiments, the carrier is a sponge suction cup.

In this way, in one aspect, even if the case is uneven, when the case is placed on the sponge suction cup, the case can have relatively good flatness, and damage to the case can be reduced to an extent. In another aspect, the sponge suction cup can generate a particular suction force on the case, thus mitigating relative displacement between the case and the sponge suction cup and causing the case to be more stably disposed on the correction mechanism.

In some embodiments, the correction mechanism further includes a guide block that is disposed on a peripheral side of the carrier and is configured to guide the case to the carrier.

In one aspect, the case can be guided to the carrier. It is conductive for the manipulator to transfer the case that is in the second state to the carrier. In another aspect, the case located on the carrier can be limited left and right. This further enhances the reliability in a correction process.

In some embodiments, the second rotation mechanism is a rotation cylinder.

In this way, the control is simple and reliable.

### BRIEF DESCRIPTION OF THE DRAWINGS

FIG. 1 is a schematic diagram of a structure of a cell insertion device according to an embodiment of the present disclosure;
FIG. 2 is a schematic diagram of a structure of a transfer mechanism according to an embodiment of the present disclosure;
FIG. 3 is a schematic diagram of a structure of a transfer mechanism according to another embodiment of the present disclosure; and
FIG. 4 is a schematic diagram of a structure of a correction mechanism according to an embodiment of the present disclosure.

### Descriptions of reference numerals:

1: feeding station; 2: transfer station; 3: correction mechanism; 31: carrier; 32: second rotation mechanism; 33: guide block; 4: transfer mechanism; 41: manipulator; 42: suction member; 43: detection mechanism; 44: first rotation mechanism; 10: cell insertion device; and 20: case.

### DETAILED DESCRIPTION

It should be noted that the embodiments and the technical features in the embodiments in the present disclosure may be combined without conflicts. Detailed descriptions in the specific implementations should be understood as explanatory notes for the purpose of the present disclosure and should not be regarded as improper limitations on the present disclosure.

Unless otherwise defined, all technical and scientific terms used herein have the same meaning as commonly understood by those skilled in the art of the present disclosure. The terms used herein are intended only for the purpose of describing specific embodiments and are not intended to limit the present disclosure. The terms "include" and "has/have", as well as any variations thereof are intended to encompass non-exclusive inclusion.

In the description of the embodiments of the present disclosure, the technical terms "first", "second", "third", and the like are only for distinguishing different objects, and may not be understood as indicating or implying the relative importance or implicitly indicating the number, specific order or primary and secondary relations of the technical features indicated. In the description of the embodiments of the present disclosure, "plurality" means two or more, unless otherwise expressly and specifically defined.

Reference herein to "an embodiment" means that a particular feature, structure, or characteristic described in connection with the embodiment may be included in at least one embodiment of the present disclosure. The appearance of this phrase in places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the descriptions of the embodiments of the present disclosure, the term "and/or" only describes an association relationship of associated objects and represents that three relations may exist. For example, A and/or B may represent three situations: A exists alone; A and B exist simultaneously; and B exists alone. In addition, the character "/" herein usually indicates an "or" relationship between associated objects.

In the description of the embodiments of the present disclosure, orientations or positional relationships indicated by the technical terms "length", "width", "thickness", "upper", "lower", "front", "rear", "left", "right", "vertical", "horizontal", "top", "bottom", "inner", "outer", "circumferential direction", "height direction", "first direction", "second direction", and the like are orientations or positional relationships as shown in the accompanying drawings, and are only for the purpose of facilitating and simplifying the descriptions of the embodiments of the present disclosure instead of indicating or implying that devices or elements indicated need to have particular orientations, and be constructed, operated, or used in the particular orientations, so that these terms are not construed as limiting the embodiments of the present disclosure.

In the description of the embodiments of the present disclosure, unless otherwise expressly specified and defined, the technical terms "mount", "connected to", "connected with", "fixed", or the like should be interpreted in a broad sense. For example, a connection may refer to a fixed connection, a detachable connection or an integral connection; or may refer to a mechanical connection or an electrical connection; or may refer to a direct connection or an indirect connection through an intermediate medium; or may refer to an internal communication between two elements or an interaction relationship between two elements. For those of ordinary skill in the art, the specific meanings of the aforementioned terms in the embodiments of the present disclosure can be understood according to specific conditions.

In the description of the embodiments of the present disclosure, unless otherwise explicitly defined and limited, the technical term "contact" should be interpreted broadly. It may refer to direct contact or contact through an intermediate medium, or may refer to contact, with no interaction force, between two elements that are in contact with each other, or may refer to contact, with an interaction force, between two elements that are in contact with each other.

With the development of clean energy, an increasing number of devices use electricity as driving energy, so that power batteries that can store more electric energy and can be charged and discharged repeatedly for many times have been rapidly developed, such as lithium-ion batteries. The power batteries are used in energy storage power source systems such as hydraulic, thermal, wind, and solar power stations, and are widely applied to electric vehicles such as electric bicycles, electric motorcycles, electric automobiles, and many fields such as aerospace. With the continuously increasing application of the power batteries, the market demand for the power batteries also constantly increases.

In an embodiment of the present disclosure, a cell may be a battery cell. The battery cell refers to a basic unit that can achieve mutual conversion between chemical energy and electrical energy, and may be configured to make a battery module or a battery pack to supply power to an electrical apparatus. The battery cell may be a primary battery or a secondary battery. The secondary battery refers to a battery cell that can be used continually by activating an active material in a charging manner after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of this application. The battery cell may be cylindrical, cuboid, or in other shapes. It can be understood that the battery cell in the embodiments of the present disclosure is a cuboid battery cell.

The battery cell includes an electrode assembly and an electrolyte solution, and the electrode assembly is formed by a positive electrode plate, a negative electrode plate, and a separator. The battery cell works mainly relying on movement of metal ions between the positive electrode plate and the negative electrode plate. The positive electrode plate includes a positive electrode current collector and a positive electrode active substance layer. A surface of the positive electrode current collector is coated with the positive electrode active substance layer. A part of the positive electrode current collector that is not coated with the positive electrode active substance layer protrudes out of a part of the positive electrode current collector that is coated with the positive electrode active substance layer. The part of the positive electrode current collector that is not coated with the positive electrode active substance layer serves as a positive electrode tab. A lithium-ion battery is taken as an example. A material of the positive electrode current collector may be aluminum. A positive electrode active material may be lithium cobalt oxide, lithium iron phosphate, ternary lithium, lithium manganate, or the like. The negative electrode plate includes a negative electrode current collector and a negative electrode active substance layer. A surface of the negative electrode current collector is coated with the negative electrode active substance layer. A part of the negative electrode current collector that is not coated with the negative electrode active substance layer protrudes from a part of the negative electrode current collector that is coated with the negative electrode active substance layer. The part of the negative electrode current collector that is not coated with the negative electrode active substance layer serves as a negative electrode tab. The negative electrode current collector may be made of copper, and a negative electrode active substance may be carbon, silicon, or the like. To ensure conduction of a large current without fusing, a plurality of positive electrode tabs are stacked together, and a plurality of negative electrode tabs are stacked together. The separator may be made of a material such as polypropylene (PP) or polyethylene (PE).

The battery cell further includes a packaging film and a case. The packaging film is wrapped around the electrode assembly, and the case encapsulates the electrode assembly (i.e. a bare battery cell) wrapped around by the packaging film, to form the battery cell. For example, the packaging film may be a mylar film, and the case may be an aluminum case, a steel case, or the like. After the electrode assembly is wound and formed, the encapsulation of the mylar film and the case will be completed through a Mylar wrapping procedure and a casing procedure. The mylar film plays a role in sealing and protecting the electrode assembly, and can effectively insulate the electrode assembly from the case, to avoid short circuiting inside the battery cell. The case achieves a protective effect.

In a production process of battery cell insertion, after a battery cell is placed into the case and the case is closed with a top cover, a battery cell with the case can be obtained. However, in the related technology, in a production process of battery insertion, during the insertion of the bare battery cell into the case, the orientation of the case is typically detected on a transfer and positioning platform. This affects cycle time. Moreover, once a reverse case is detected, a device needs to sound an alarm and be shut down to increase cycle time. As a result, the production efficiency is reduced.

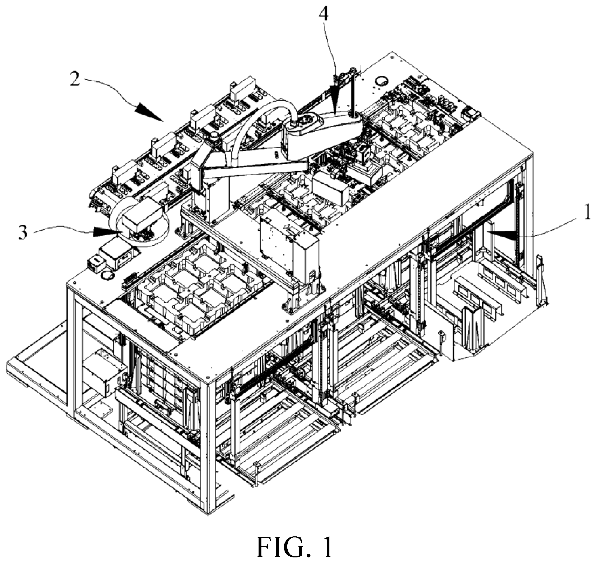

Embodiments of the present disclosure provide a cell insertion device 10. As shown in FIG. 1 to FIG. 4, the cell insertion device 10 includes a control device, a feeding station 1, a transfer station 2, and a transfer mechanism 4. The feeding station 1 is configured to store a case 20 to be detected. The transfer station 2 is configured to store a case 20 that has succeeded in detection. The transfer mechanism 4 includes a manipulator 41 provided with a suction member 42 and a detection mechanism 43 arranged on the manipulator 41. The control device controls the suction member 42 to suck the case 20 on the feeding station 1 and controls the detection mechanism 43 to detect a state of the case 20 on the suction member 42. The state of the case 20 includes a first state and a second state. The first state and the second state are different. When the case 20 is in the first state, the control device controls the manipulator 41 to transfer the case 20 to the transfer station 2.

The cell insertion device 10 includes one or more transfer mechanisms 4. That is, the cell insertion device 10 may include only one transfer mechanism 4, or may include a plurality of transfer mechanisms 4. In a case that a plurality of transfer mechanisms 4 are included, the plurality of transfer mechanisms 4 may simultaneously transfer cases 20, thereby enhancing the production efficiency.

It should be noted that plurality in this embodiment of the present disclosure refers to two or more in quantity.

The feeding station 1 is configured to store the case 20 to be detected. Being to be detected means that a state of the case 20 is to be determined.

Herein, the state of the case 20 includes the first state and the second state. That is, the case 20 in the feeding station 1 is either in the first state or in the second state.

It should be noted that the transfer station 2 is configured to store the case 20 that has succeeded in detection. That is, succeeding in detection means that the case 20 is in the first state. That is, the transfer station 2 is configured to store the case 20 in the first state.

The transfer mechanism 4 includes the manipulator 41 provided with the suction member 42 and the detection mechanism 43 arranged on the manipulator 41. The control device controls the suction member 42 to suck the case 20 on the feeding station 1 and controls the detection mechanism 43 to detect the state of the case 20 on the suction member 42.

For example, the cell insertion device 10 includes a control device (not shown), and the control device is configured to control operation processes of the detection mechanism 43 of the transfer mechanism 4, the manipulator 41, and the like. The control device may include but is not limited to at least one of an industrial personal computer, a programmable logic controller (PLC), an upper computer, and the like. The upper computer may include a server, a laptop, a tablet, a desktop computer, a smartphone, and the like.

A specific type of the detection mechanism 43 is not limited herein, and is, for example, a proximity or diffuse reflection photoelectric switch, a charge coupled device (CCD) visual detection system, or the like.

The control device controls the suction member 42 to suck the case 20 on the feeding station 1 and controls the detection mechanism 43 to detect the state of the case 20 on the suction member 42. The detection mechanism 43 is disposed on the manipulator 41, and can better detect the case 20 sucked by the suction member 42.

In some embodiments, a plurality of suction members 42 may be included. Each suction member 42 may correspond to one detection mechanism 43.

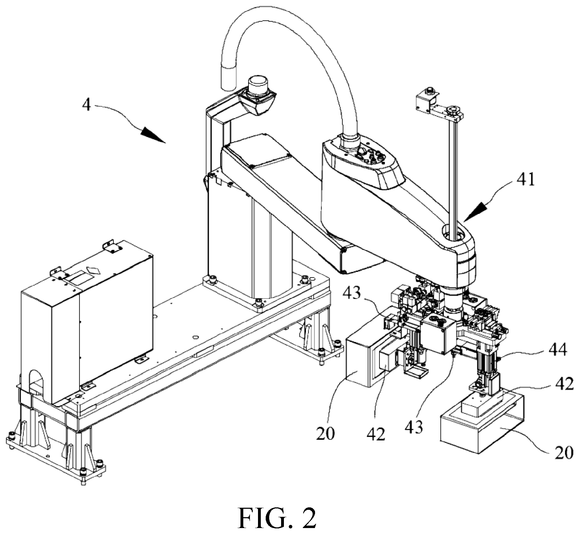

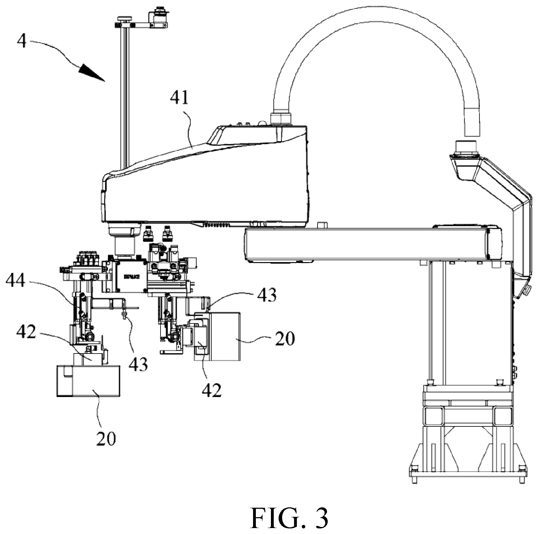

In some embodiments, referring to FIG. 2 and FIG. 3, the plurality of detection mechanisms 43 may independently detect the states of the cases 20 on the plurality of suction members 42.

In some embodiments, the plurality of detection mechanisms 43 may detect the states of the cases 20 on the plurality of suction members 42 in a concurrent and linked manner. For example, the manipulator 41 includes a first suction member 42 and a second suction member 42. The cases 20 on the first suction member 42 and the second suction member 42 are in place at the same time. In response to detecting that the first suction member 42 and the second suction member 42 have sucked the cases 20, the PLC may transmit a first trigger signal to both the detection mechanism 43 corresponding to the first suction member 42 and the detection mechanism 43 corresponding to the second suction member 42, to concurrently use the detection mechanism 43 corresponding to the first suction member 42 to detect the case 20 on the first suction member 42 to obtain a detection result of the case 20, and use the detection mechanism 43 corresponding to the second suction member 42 to detect the case 20 on the second suction member 42 to obtain a detection result of the case 20.

According to the cell insertion device 10 provided in this embodiment of the present disclosure, in one aspect, by disposing the detection mechanism 43 on the manipulator 41, the control device controls the suction member 42 of the manipulator 41 to suck the case 20 on the feeding station 1 and controls the detection mechanism 43 to detect the state of the case 20 on the suction member 42. The detection mechanism 43 detects the state of the case 20 on the suction member 42. The state of the case 20 can be detected on the transfer mechanism 4. If the detection mechanism 43 detects that the case 20 is in the first state, the control device can directly control the manipulator 41 to transfer the case 20 to the transfer station 2 without first transferring the case 20 to the transfer station 2 through the transfer mechanism 4, and then the state of the case 20 is detected. The cell insertion device 10 does not need to sound an alarm and be shut down, so that the cycle time is reduced, and the production efficiency is enhanced.

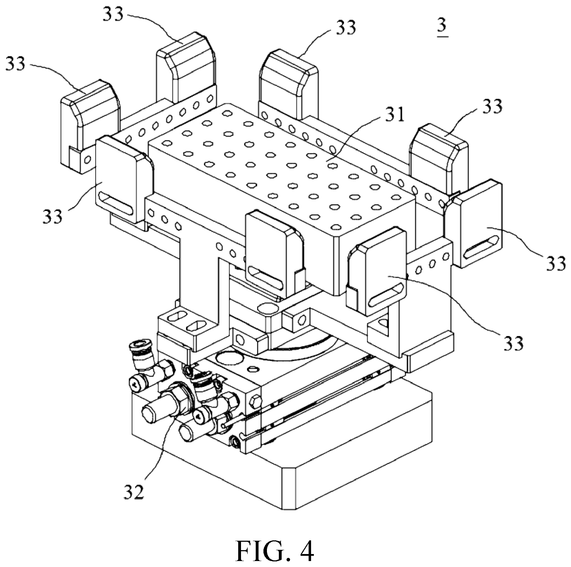

In some implementations, referring to FIG. 1 and FIG. 4, the cell insertion device 10 further includes a correction mechanism 3 configured to switch the case 20 from the second state to the first state.

Herein, by disposing the detection mechanism 43 on the manipulator 41, the control device controls the detection mechanism 43 to detect the state of the case 20 on the suction member 42. If the detection mechanism 43 detects that the case 20 is in the first state, it indicates that the detection succeeds. The control device controls the manipulator 41 to transfer the case 20 that is in the first state to the transfer station 2. If the detection mechanism 43 detects that the case 20 is in the second state, it indicates that the detection fails. The control device controls the correction mechanism 3 to switch the case 20 that is in the second state from the second state to the first state, and controls the manipulator 41 to transfer the case 20 switched to the first state to the transfer station 2. In one aspect, by disposing the detection mechanism 43 on the manipulator 41, the control device controls the suction member 42 of the manipulator 41 to suck the case 20 on the feeding station 1 without first transferring the case 20 to the transfer station 2 through the transfer mechanism 4, and then the state of the case 20 is detected. The cell insertion device 10 does not need to sound an alarm and be shut down, so that the cycle time is reduced, and the production efficiency is enhanced. In another aspect, by providing the correction mechanism 3, the control device can control the correction mechanism 3 to switch the case 20 that is in the second state from the second state to the first state, so as to automatically correct an incoming case 20 that is placed reversely, without sounding an alarm and shutting down the device. Manual intervention is not required either. This further enhances the production efficiency and increases the single-machine throughput.

In some implementations, referring to FIG. 2 and FIG. 3, the transfer mechanism 4 further includes a first rotation mechanism 44. The first rotation mechanism 44 is configured to drive the case 20 on the suction member 42 to rotate in a preset direction by a preset angle. A rotation shaft of the case 20 that rotates in the preset direction is parallel to a bottom wall of the case 20. When the case 20 is in the first state, after the case 20 rotates in the preset direction by 90°, the bottom wall of the case 20 faces the detection mechanism 43. When the case 20 is in the second state, after the case 20 rotates in the preset direction by 90°, an opening in a top of the case 20 faces the detection mechanism 43.

In the existing technology, for stability and convenience of feeding, the case 20 is stored in the feeding station 1 in a lying form. For a subsequent step of insertion, the lying case 20 in the feeding station 1 needs to rotate by 90° in the preset direction through the transfer mechanism 4, and then is placed on the transfer station 2 in a posture in which the opening in the top of the case 20 faces downward and the bottom wall of the case 20 faces upward.

If the control device controls the first rotation mechanism 44 to drive the case 20 on the suction member 42 to rotate by 90° in the preset direction, and the bottom wall of the case 20 faces the detection mechanism 43, it indicates that the case 20 is in the first state.

If the control device controls the first rotation mechanism 44 to drive the case 20 on the suction member 42 to rotate by 90° in the preset direction, and the opening in the top of the case 20 faces the detection mechanism 43, it indicates that the case 20 is in the second state.

Herein, the preset direction is not limited, and may be a clockwise direction or an anticlockwise direction.

Specifically, the control device controls the detection mechanism 43 to detect the state of the case 20 on the suction member 42. If the detection mechanism 43 detects the bottom wall (which does not include a bottom wall detected by the detection mechanism 43 passing through the opening of the case 20 here) of the case 20 within a preset range, it indicates that the case 20 is in the first state, and the detection succeeds. The control device controls the manipulator 41 to transfer the case 20 that is in the first state to the transfer station 2. However, if the case 20 is in the second state and after the case 20 rotates by 90° in the preset direction, the opening in the top of the case 20 faces the detection mechanism 43. In this case, the detection mechanism 43 can detect only the opening of the case 20 within the preset range and cannot detect the bottom wall of the case 20. It indicates that the case 20 is in the second state, and the detection fails. The control device controls the correction mechanism 3 to switch the case 20 that is in the second state from the second state to the first state, and controls the manipulator 41 to transfer the case 20 switched to the first state to the transfer station 2.

It should be noted that a specific type and an arrangement position of the correction mechanism 3 are not limited herein.

In some implementations, the correction mechanism 3 is disposed on the manipulator 41 and configured to switch the case 20 on the suction member 42 from the second state to the first state.

Herein, by disposing the correction mechanism 3 on the manipulator 41, when the detection mechanism 43 detects that the case 20 is in the second state, the correction mechanism 3 can directly switch, on the manipulator 41, the case 20 on the suction member 42 from the second state to the first state, and the manipulator 41 does not need to place the case 20 at another place to correct the state of the case 20, thereby reducing steps, reducing the cycle time, further enhancing the production efficiency, and increasing the single-machine throughput.

In some implementations, referring to FIG. 1 to FIG. 4, the correction mechanism 3 includes a carrier 31. When the case 20 is in the second state, the control device controls the manipulator 41 to transfer the case 20 onto the carrier 31, and controls the case 20 on the carrier 31 to be switched from the second state to the first state.

Herein, the correction mechanism 3 is not disposed on the manipulator 41. The correction mechanism 3 is provided with the carrier 31, and the carrier 31 is configured to: carry the case 20 that is in the second state and then perform correction.

There are a plurality of manners for controlling the case 20 on the carrier 31 to be switched from the second state to the first state. The case 20 may be directly operated, to be switched from the second state to the first state. Alternatively, the carrier 31 may be operated to switch the case 20 from the second state to the first state.

The control device controls the manipulator 41 to transfer the case 20 to the carrier 31 and controls the case 20 on the carrier 31 to be switched from the second state to the first state. That is, the correction mechanism 3 is not disposed on the manipulator 41. The correction mechanism 3 and the manipulator 41 are disposed separately, thereby simplifying the structure and drive fit. It is conductive to enhancing the reliability and stability of the cell insertion device 10.

In some implementations, referring to FIG. 4, the correction mechanism 3 further includes a second rotation mechanism 32. The second rotation mechanism 32 is configured to drive the case 20 on the carrier 31 to rotate by 180°, so that the case 20 on the carrier 31 is switched from the second state to the first state.

A specific type of the second rotation mechanism 32 is not limited herein, and is, for example, a rotation cylinder. In this way, the control is simple and reliable.

Herein, the second rotation mechanism 32 may directly drive the case 20 to rotate by 180°, or drive the carrier 31 to rotate by 180°, so as to drive the case 20 to rotate by 180°, so that the case 20 on the carrier 31 is switched from the second state to the first state.

The correction mechanism 3 is provided with the second rotation mechanism 32, and the case 20 on the carrier 31 is driven to rotate by 180° through the second rotation mechanism 32, so that the case 20 on the carrier 31 is switched from the second state to the first state. The structure is simple and reliable.

In some implementations, referring to FIG. 1, the control device controls the manipulator 41 to transfer the case 20 that is in the first state in the correction mechanism 3 to the transfer station 2.

Herein, after controlling the correction mechanism 3 to switch the case 20 that is in the second state from the second state to the first state, the control device controls the manipulator 41 to transfer the case 20 switched to the first state to the transfer station 2, thereby implementing automation of a correction process of the case 20, reducing the labor costs, and enhancing the production efficiency.

It should be further noted that a specific type of the carrier 31 is not limited herein. For example, the carrier 31 is a suction cup or is only a simple carrying plate.

In some implementations, the carrier 31 is a sponge suction cup.

The sponge suction cup itself has an elasticity and can generate a suction force. In this way, in one aspect, even if the case 20 is uneven, when the case 20 is placed on the sponge suction cup, the case 20 can have relatively good flatness, and damage to the case 20 can be reduced to an extent. In another aspect, the sponge suction cup can generate a particular suction force on the case 20, thus mitigating relative displacement between the case 20 and the sponge suction cup and causing the case 20 to be more stably disposed on the correction mechanism 3.

In some implementations, referring to FIG. 4, the correction mechanism 3 further includes a guide block 33 that is disposed on a peripheral side of the carrier 31 and is configured to guide the case 20 to the carrier 31.

A specific structural shape of the guide block 33 is not limited herein, provided that the guide block 33 can guide the case 20.

A specific quantity of guide blocks 33 is not limited herein. There may be one or a plurality of guide blocks. When a plurality of guide blocks 33 are included, the plurality of guide blocks 33 are spaced apart along the peripheral side of the carrier 31.

For example, a guide surface is provided on one side of the guide block 33 facing the carrier 31.

The correction mechanism 3 is provided with the guide block 33 on the peripheral side of the carrier 31. In one aspect, the case 20 can be guided to the carrier 31. It is conductive for the manipulator 41 to transfer the case 20 that is in the second state to the carrier 31. In another aspect, the case 20 located on the carrier 31 can be limited left and right. This further enhances the reliability in a correction process.

For example, the detection mechanism 43 detects that the case 20 is in the second state, and the control device controls the manipulator 41 to transfer the case 20 to a recovery station. That is, the case 20 in the second state is recovered without correction, thereby enhancing the production efficiency.

For example, an implementation process of inserting a bare battery cell includes the following steps:
Step S801: The control device controls the transfer mechanism 4 to suck the case 20 from the feeding station 1.
Step S802: The control device controls the suction member 42 of the transfer mechanism 4 to suck the case 20. After the manipulator 41 moves to an appropriate position, the control device controls the first rotation mechanism 44 of the transfer mechanism 4 to drive the case 20 on the suction member 42 to rotate in the preset direction by the preset angle, and the control device controls the detection mechanism 43 to detect the state of the case 20 on the suction member 42.
Step S803: The detection mechanism 43 detects that the case 20 is in the first state, and the control device controls the manipulator 41 to transfer the case 20 that is in the first state to the transfer station 2.
Step S804: The detection mechanism 43 detects that the case 20 is in the second state, and the control device controls the manipulator 41 to transfer the case 20 to the carrier 31 of the correction mechanism 3. After controlling the correction mechanism 3 to switch the case 20 that is in the second state from the second state to the first state, the control device controls the manipulator 41 to transfer the case 20 switched to the first state to the transfer station 2.

In the description of the present disclosure, the descriptions with reference to the terms such as "an embodiment", "in some embodiments", " in some other embodiments", and "in still some other embodiments" mean that specific features, structures, materials, or characteristics described in combination with the embodiment or examples are included in at least one embodiment or example of the present disclosure. In the present disclosure, exemplary expressions of the above terms do not necessarily refer to the same embodiment or example. Furthermore, the specific features, structures, materials, or characteristics described may be combined in any suitable manner in any one or more embodiments or examples. In addition, those skilled in the art may combine the different embodiments or examples described in the present disclosure, as well as the features of different embodiments or examples, without mutual contradictions.

The above descriptions are only exemplary embodiments of the present disclosure, and are not intended to limit the present disclosure. Those skilled in the art can make various changes and transformations on the present disclosure. Any modification, equivalent replacement, and improvement made within the spirit and principle of the present disclosure shall fall within the protection scope of the present disclosure.

## Claims

1. A cell insertion device, comprising:
a control device;
a feeding station configured to store a case to be detected;
a transfer station configured to store a case that has succeeded in detection; and
a transfer mechanism comprising a manipulator provided with a suction member and a detection mechanism arranged on the manipulator, wherein the control device controls the suction member to suck the case on the feeding station and controls the detection mechanism to detect a state of the case on the suction member; the state of the case comprises a first state and a second state, and the first state and the second state are different; and
when the case is in the first state, the control device controls the manipulator to transfer the case to the transfer station.

2. The cell insertion device according to claim 1, wherein the transfer mechanism comprises a first rotation mechanism; the first rotation mechanism is configured to drive the case on the suction member to rotate in a preset direction by a preset angle; a rotation shaft of the case that rotates in the preset direction is parallel to a bottom wall of the case;
when the case is in the first state, after the case rotates in the preset direction by 90°, the bottom wall of the case faces the detection mechanism; and
when the case is in the second state, after the case rotates in the preset direction by 90°, an opening in a top of the case faces the detection mechanism.

3. The cell insertion device according to claim 1 or 2, wherein the cell insertion device further comprises a correction mechanism configured to switch the case from the second state to the first state.

4. The cell insertion device according to claim 3, wherein the correction mechanism is disposed on the manipulator and configured to switch the case on the suction member from the second state to the first state.

5. The cell insertion device according to claim 3 or 4, wherein the correction mechanism comprises a carrier; and when the case is in the second state, the control device controls the manipulator to transfer the case onto the carrier, and controls the case on the carrier to be switched from the second state to the first state.

6. The cell insertion device according to claim 5, wherein the correction mechanism further comprises a second rotation mechanism; and the second rotation mechanism is configured to drive the case on the carrier to rotate by 180°, so that the case on the carrier is switched from the second state to the first state.

7. The cell insertion device according to claim 5 or 6, wherein the control device controls the manipulator to transfer the case that is in the first state in the correction mechanism to the transfer station.

8. The cell insertion device according to any one of claims 5 to 7, wherein the carrier is a sponge suction cup.

9. The cell insertion device according to any one of claims 5 to 8, wherein the correction mechanism further comprises a guide block that is disposed on a peripheral side of the carrier and is configured to guide the case to the carrier.

10. The cell insertion device according to any one of claims 6 to 9, wherein the second rotation mechanism is a rotation cylinder.

11. The cell insertion device according to any one of claims 1 to 10, wherein the detection mechanism is a diffuse reflection detection switch.

12. The cell insertion device according to any one of claims 1 to 11, wherein a plurality of detection mechanisms are comprised; and the control device independently controls the plurality of detection mechanisms to detect the states of the cases on the plurality of suction members.

13. The cell insertion device according to any one of claims 1 to 11, wherein a plurality of detection mechanisms are comprised; and the control device controls the plurality of detection mechanisms in a concurrent and linked manner to detect the states of the cases on the plurality of suction members.
